Europäisches Patentamt

European Patent Office

Office européen des brevets

(11) Publication number: 0 336 307
A2

# EUROPEAN PATENT APPLICATION

(21) Application number: 89105664.0

(22) Date of filing: 30.03.89

(51) Int. Cl.⁴: **F16K 15/14 , F16K 17/19**

(30) Priority: 06.04.88 FI 881604

(43) Date of publication of application:
11.10.89 Bulletin 89/41

(84) Designated Contracting States:
**AT BE CH DE ES FR GB GR IT LI LU NL SE**

(71) Applicant: **WISER OY**

**SF-04201 Kerava(FI)**

(72) Inventor: **Järvenpää, Viljo Juhana**
**Vellamontie 21 as 6**
**SF-04200 Kerava(FI)**

(74) Representative: **Tiedtke, Harro, Dipl.-Ing. et al**
**Patentanwaltsbüro Tiedtke-Bühling-Kinne-**
**Grupe-Pellmann-Grams-Struif-Winter-Roth**
**Bavariaring 4**
**D-8000 München 2(DE)**

(54) **Double-valve and membrane arrangement of non-return valve.**

(57) The invention relates to a non-return valve comprising parts (4 and 5) that form the body construction of the non-return valve. The non-return valve is furnished with a closing element closing a pipe (4a) with a center part (8) of at least the pipe diameter, which center part (8) is connected to the outer periphery (13) of the closing element by intermediate spools, and/or with a closing part having an opening and an outer periphery (13). The closing element is made of an elastic and/or stiff material, and the intermediate spools between the outer periphery (13) and the center part (8) are located in a slanting position forming an angle with respect to the outer periphery (13) so that the closing element functions elastically and causes a turning movement to the closing center part (8), which produces the space required by the flow. The closing part and its opening can be placed on the closing element, in which case the closing element is preferably made of a stiff material. The invention also relates to a double valve, which is formed by combining closing elements and/or closing parts of the non-return valve according to the invention.

FIG. 1

## Double-valve and membrane arrangement of non-return valve

The invention relates to a non-return valve comprising parts that form the body construction of the non-return valve, the non-return valve being furnished with a closing element closing a pipe with a center part of at least the pipe diameter, which center part is connected to the outer periphery of the closing element by intermediate spools, and/or with a closing part having an opening and an outer periphery.

The invention also relates to a double-valve.

The most common applications of non-return valves of the prior art are pipelines. An essential application is e.g. a piston pump arrangement, in which the suction and delivery sides are closed with non-return valves as the piston reciprocates, which results in a medium transfer.

It is also known in the art that non-return valves are used one at a time and that they prevent back flow either with a spherical ball or a valve, or when furnished with a flap. The elements used for preventing back flow can often be closed by means of a spring, in case they are not capable of closing the port by their own weight. In these known solutions, disadvantages in addition to a high price often include e.g. a risk of clogging as well as difficulties caused by wearing. It is obvious that e.g. a ball nozzle has to be concentric with respect to the port to make the closing possible. Even a light wearing or eccentricity of the ball will result in a leakage. A drawback of this valve arrangement is that it requires a control, in most cases a spindle control, which guides the closing element to the pipe end. The spindle control is, however, very sensitive to impurities and problems caused by them. In these valve arrangements as well as in ball arrangements, an auxiliary closing force is often achieved e.g. by spring loading. In flap valve arrangements, the closing mechanism is usually fixed at one of its edges, whereby the flap is guided and closed correctly. However, a drawback of the flap valve arrangement is that possible impurities or the like accumulate on one of the edges of the flap, often on the hinge edge, due to variations in the flow rate, which results in that the closing is no longer complete. In addition, the location of the flap valve and its direction are to be carefully oriented and considered. Drawbacks of the known arrangements described above also include accurate machinings and installation tolerances, which further increases the total costs.

The purpose of the invention is to create such a double-valve and a membrane arrangment of a non-return valve, which does not include the drawbacks of the known arrangements.

In order to reach the goals described above and to be illustrated below, the non-return valve in accordance with the invention is mainly characterized in that the closing element is made of an elastic and/or stiff material and that the intermediate spools between the outer periphery and the center part are located in a slanting position forming an angle with respect to the outer periphery so that the the closing element functions elastically and causes a turning movement to the closing center part, which produces the space required by the flow, and that the closing part and its opening can be placed on the closing element, in which case the closing element is preferably made of a stiff material.

The double-valve according to the invention is mainly characterized in that the double-valve is formed by combining closing elements and/or closing parts of a non-return valve according to the invention.

The arrangement according to the invention makes small installation dimensions possible. In one application of the invention, a double-valve is arranged in a single body, which makes e.g. a medium flow on both the inner and outer side of the transfer pipe possible. Furthermore, in one case of the arrangement according to the invention, the non-return valve according to the invention can be used also as a pipe-joint part, which further permits even a free selection of the axial angle of the pipe part. In addition, when using the solution according to the invention, the use of springs becomes unnecessary due to the elastic material utilized and its application.

In the following, the invention will be described in more detail with reference to the figures of the appended drawing, in which

Fig. 1 shows a non-return valve,

Fig. 2 shows another arrangement for a non-return valve,

Fig. 3 is a schematic view of a membrane arrangement of a non-return valve,

Fig. 3a is a schematic view of a membrane arrangement of a non-return valve,

Fig. 4 is a schematic view of a membrane arrangement of a non-return valve,

Fig. 5 shows a double-valve, and

Fig. 6 shows a closing valve.

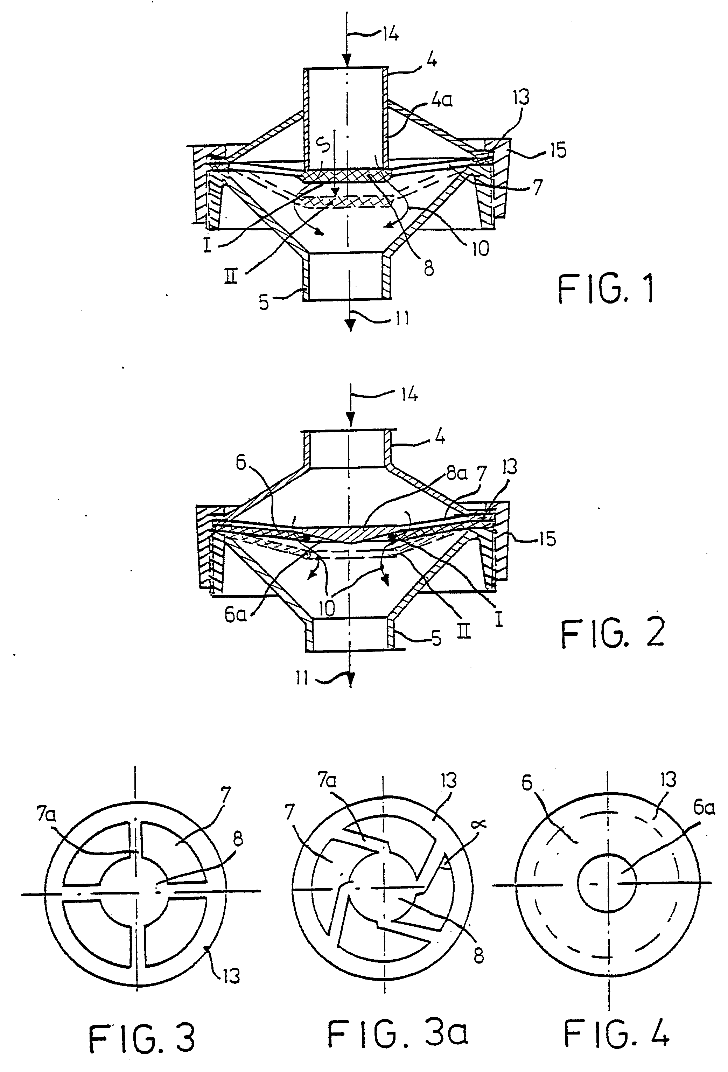

In accordance with Fig. 1, a medium, e.g. a liquid, flows in a pipe 4a. The pipe 4a can be blocked with a reinforced closing element, e.g. a membrane, made of a flexible material, which membrane is shown in Fig. 3 and 3a. The reinforced center part 8 is either of the same size as the opening of the pipe 4a or slightly larger. The outer periphery 13 of the membrane also acts as a sealing between the lower part 5 and the upper part 4 in such a way that tightening is easy to perform by means of a threaded clamping ring 15. In this case, the parts 4 and 5 can also be turned in the desired manner with respect to the vertical axis.

In accordance with Fig. 3 and 3a, intermediate spools 7a are located between the outer periphery 13 of the membrane and the center part 8. In addition to a rectangular location (Fig. 3), the intermediate spools 7a can also be placed in an oblique angle (Fig. 3a). As a result, when the levels formed by the center part 8 and outer periphery 13 change, the spool angle a will change and is in its extreme position 90°, i.e. farthermost from the end of the pipe 4a. The center part 8 turns by 90 - ā degrees with respect to the end of the pipe 4a, and it can be seen that the spools 7a concerned function like a spring when bending.

In accordance with Fig. 1, the distance S from the end of the pipe 4a to the membrane must be such that the distance S corresponds to the port of the pipe 4a. In addition to the change in the angle ā of the intermediate spools 7a, the intermediate spools 7a are ductile because of the elasticity of the material. In the rest position, the center part 8 and the outer periphery 13 can be placed flush with each other.

The elastic closing part 6 shown in Fig. 2 is similar to that in Fig. 4, in which the center part of the closing part or the membrane is formed into a hole 6a. The outer periphery 13 of the membrane corresponds to that shown in Fig. 3 and 3a. In the case of Fig. 2, the part 4 is closed by a plate 8a. According to Fig. 2, the lower part of the pipe 4a, i.e. the section of the pipe 4a located inside the part 4, can be omitted, and the parts of the membrane according to Fig. 3 and 3a, the outer periphery 13, the intermediate spools 7a and the center part 8 will be made of a stiff material, which results in a stiff grate, and an elastic membrane according to Fig. 4 is placed thereon (13, 7a, 8), i.e. on the stiff grate. The flow 14 travelling through the openings 7 of the stiff grate then pushes the elastic closing part 6 so that the outer periphery 13 is fixed at its edges and tightened in a seal-like manner by a clamping ring 15, whereby the opening 6a will be released from the stiff center part 8a into a position II, and the flow 14 can thus continue as a flow 10 through the non-return valve. The outflow 11 occurs in a desired manner through the part 5.

The position I indicated in Fig. 1 and 2 is a so-called closing position, and the position II represents a flow occurrence.

The operation of the elastic closing part 6 or the membrane can also be arranged on the same level, or the arrangement can be realized also according to Fig. 2, i.e. provided with a suitable dishing stress.

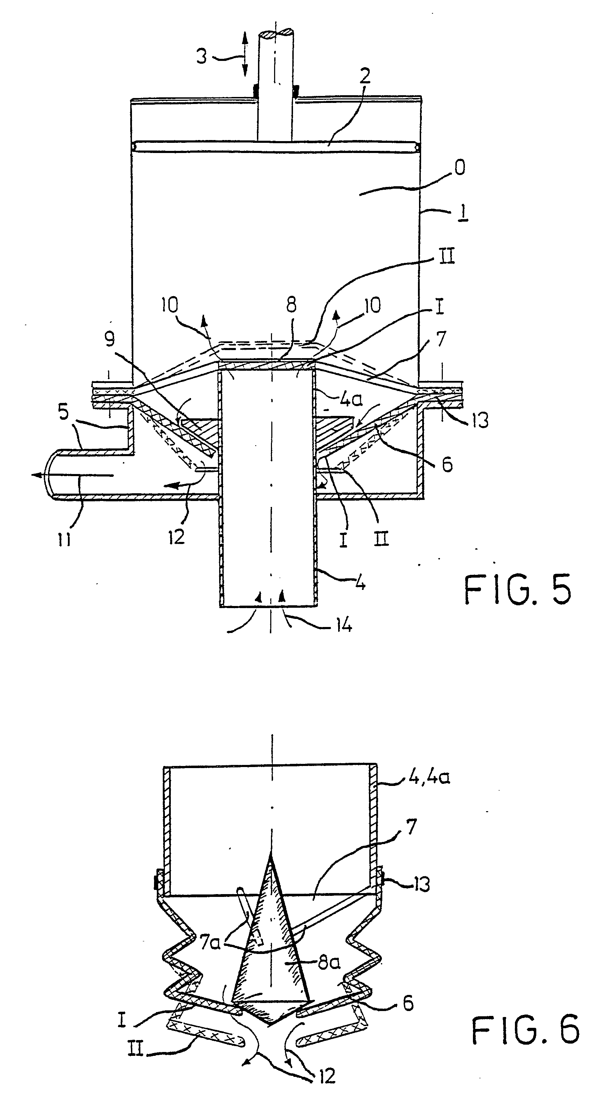

Fig. 5 shows an embodiment of the arrangement according to the invention, which embodiment is combined in such a way that the closing element and the closing part, i.e. the membranes according to Fig. 3 and 4, made of an elastic material are in this case combined at their outer periphery 13. Furthermore, with respect to the lower part of the pipe 4a the closing element and the closing part 6 are placed so that the diameter of the opening 6a of the closing part 6 is smaller than the outer diameter of the pipe 4a. The flow 12 can then travel only in one direction as is the case with the flow 14 when it passes the center part 8 of the closing element or the membrane as a flow 10. In this case, e.g. the piston 2 of the piston pump 1 can by means of a reciprocating movement 3 be brought into a suction and/or over-pressure space 0 below the piston 2. This is shown as a flow 14 in and as a flow 11 out. The flows 14 and 10 travel inside the pipe 4a. Outside the pipe 4a, the flow 12 travels in the opposite direction. If there is a need to keep the opening 6a of the closing part 6 larger, an expanded ring 9 can be joined to the pipe part 4a, in which case the flow 12 and its formation can be compared with the flow 10 of Fig. 2, when needed.

The ring 9 can, when needed, be joined to a stiff closing element according to Fig. 3 in such a way that the pipe part 4a extends through the center part 8 of the closing element and is joined thereto. In this case, the non-return valves according to Fig. 1 and 2 are joined together in accordance with Fig. 5, which results in an extremely compact double-valve construction. The operation of the piston pump can be realized by connecting the pump of the part of Fig. 5 downwards of the flange 13 to the construction 1.

In an embodiment of the solution according to the invention, the pipe 4a can be joined to an upper part 4 according to Fig. 2, which results in an upper part in accordance with Fig. 1. The embodiment of the arrangement according to invention shown in Fig. 5 is in principle similar to that shown in Fig. 1 and 2.

In a solution according to the invention, the construction as such is not a decisive factor, but the closing elements of Fig. 3 and 3a and the closing part of Fig. 4 can be placed between the parts 4 and 5, when so desired. These can, furthermore, be axially joined to each other through their outer peripheries 13, most preferably by a threaded clamping ring 15.

When the closing elements and/or closing part of Fig. 3, 3a and/or 4 are omitted from the arrangement according to the invention and then a suitable sealing is used on the outer periphery 13, the parts 4 and 5 function as normal pipe-joint parts, which may be needed in the pipeline for loosening certain parts and for angle changes.

In an embodiment according to the invention, the outer periphery 13 of the elastic closing valve 6 can be fastened with hose clamps and the extension of the pipe 4a is changed into a conical center part 8a. In accordance with Fig. 6, the closing valve 6 can be made of so-called bellows rubber into a pleated form, in which valve the outer periphery 13 is tubular and the opening 6a is contracted.

The invention has been described above with reference to certain preferred embodiments only. However, the purpose is not to limit the invention to the above embodiments, but various changes and modifications are possible within the scope of inventive idea defined in the appended Claims.

The invention relates to a non-return valve comprising parts (4 and 5) that form the body construction of the non-return valve. The non-return valve is furnished with a closing element closing a pipe (4a) with a center part (8) of at least the pipe diameter, which center part (8) is connected to the outer periphery (13) of the closing element by intermediate spools, and/or with a closing part having an opening and an outer periphery (13). The closing element is made of an elastic and/or stiff material, and the intermediate spools between the outer periphery (13) and the center part (8) are located in a slanting position forming an angle with respect to the outer periphery (13) so that the closing element functions elastically and causes a turning movement to the closing center part (8), which produces the space required by the flow. The closing part and its opening can be placed on the closing element, in which case the closing element is preferably made of a stiff material. The invention also relates to a double valve, which is formed by combining closing elements and/or closing parts of the non-return valve according to the invention.

the center part (8) are located in a slanting position forming an angle (ā) with respect to the outer periphery (13) so that the closing element functions elastically and causes a turning movement to the closing center part (8), which produces the space required by the flow, and that the closing part (6) and its opening (6a) can be placed on the closing element, in which case the closing element is preferably made of a stiff material.

2. A non-return valve according to Claim 1, characterized in that the position of the pipe (4a) and the center part (8) of the closing element can be adapted to the position of the closing part (6) and its opening (6a).

3. A non-return valve according to Claim 1 or 2, characterized in that the closing element and/or closing part of the non-return valve can be tightened at its outer periphery (13) between the parts (4,5) forming the body construction of the non-return valve by means of a clamping ring (15) and/or a corresping element.

4. A double-valve, characterized in that the double-valve is formed by combining closing elements and/or closing parts of a non-return valve according to one of the preceding Claims.

5. A double valve according to Claim 4, characterized in that flows (10) and (12) travel in the double-valve inside and outside the pipe part (4a).

6. A double valve according to Claim 4 or 5, characterized in that it can be connected to an alternating under-pressure and over-pressure space for guiding the medium flow in one direction.

7. A double valve according to any of the Claims 4-6, characterized in that it comprises closing elements and/or parts located on top of each other, whereby it comprises a center part (8) closing the pipe part (4a) and a closing part closing the part (4).

8. A non-return valve according to any of the Claims 1-7, characterized in that it is adapted to be used as a pipe joint part.

## Claims

1. A non-return valve comprising parts (4 and 5) that form the body construction of the non-return valve, the non-return valve being furnished with a closing element closing a pipe (4a) with a center part (8) of at least the pipe diameter, which center part (8) is connected to the outer periphery (13) of the closing element by intermediate spools (7a), and/or with a closing part (6) having an opening (6a) and an outer periphery (13), characterized in that the closing element is made of an elastic and/or stiff material and that the intermediate spools (7a) between the outer periphery (13) and

FIG. 1

FIG. 2

FIG. 3

FIG. 3a

FIG. 4

FIG. 5

FIG. 6